# EUROPEAN PATENT APPLICATION

(11) **EP 3 927 006 A1**
(43) Date of publication of application: **22.12.2021**
(21) Application number: 19915350.3
(22) Date of filing: 14.02.2019
(51) Int. Cl.: H04W 24/10, H04W 52/02

(54) **USER EQUIPMENT AND MEASUREMENT METHOD**

(71) Applicant: NTT DOCOMO, INC., Chiyoda-Ku Tokyo 100-6150 (JP)
(72) Inventor: OHARA, Tomoya, Tokyo 100-6150 (JP)
(74) Representative: Hoffmann Eitle
(86) International application number: PCT/JP2019/005433
(87) International publication number: WO 2020/166029

(57) **Abstract**

A user equipment includes a receiving unit that receives information indicating that, in a case in which a first condition is satisfied by a first type of measurement result, a second type of measurement result is to be reported, and a control unit that determines, when it is specified or indicated that RRM measurement relaxing or adaptation is to be performed in a case in which a second condition including a threshold value is satisfied, that the threshold value corresponds to the first type of measurement result, and performs the RRM measurement relaxing or adaptation in a case in which the second condition including the threshold value is satisfied by the first type of measurement result.

## Description

### TECHNICAL FIELD

The present invention relates to a user equipment and a measurement method in a wireless communication system.

### BACKGROUND ART

In New Radio (NR) (also referred to as "5G") which is a successor system of Long Term Evolution (LTE), a technology satisfying a large-capacity system, a high-speed data transmission rate, a low delay, simultaneous connection of multiple terminals, a low cost, power saving, and the like is under review (for example, Non-Patent Document 1).

In NR, a measurement report (measurement report) in which a user equipment performs measurement and reports a measurement result is specified (for example, Non-Patent Document 2).

### CITATION LIST

### NON-PATENT DOCUMENT

Non-Patent Document 1: 3GPP TS 38.300 V15.4.0 (2018-12)
Non-Patent Document 2: 3GPP TS 38.133 V15.4.0 (2018-12)

### SUMMARY OF THE INVENTION

### PROBLEM TO BE SOLVED BY THE INVENTION

In a wireless communication system of NR, relaxing/adapting Radio Resource Management (RRM) measurement under a certain condition has been discussed. Further, using reference signal received power (RSRP) as a type of measurement result used as the RRM measurement relaxing/adapting condition has been discussed.

However, the type of measurement result used as a transmission trigger of the measurement report is not limited to the RSRP but may be reference signal received quality (RSRQ), signal to interference plus noise power ratio (SINR), or the like. Therefore, if only the RSRP is used as the type of measurement result used as the RRM measurement relaxing/adapting condition, an RRM measurement relaxing/adapting operation is unlikely to be performed properly.

The present invention was made in light of the foregoing, and it is an object of the present invention to enable a user equipment to perform RRM measurement relaxing/adapting under appropriate conditions and reduce power consumption without lowering substantial performance in a wireless communication system.

### MEANS FOR SOLVING PROBLEM

According to one aspect of the disclosed technology, a user equipment including a receiving unit that receives information indicating that, in a case in which a first condition is satisfied by a first type of measurement result, a second type of measurement result is to be reported, and a control unit that determines, when it is specified or indicated that RRM measurement relaxing or adaptation is to be performed in a case in which a second condition including a threshold value is satisfied, that the threshold value corresponds to the first type of measurement result, and performs the RRM measurement relaxing or adaptation in a case in which the second condition including the threshold value is satisfied by the first type of measurement result is provided.

According to one aspect of the disclosed technology, a user equipment including a receiving unit that receives information indicating that, in a case in which a first condition is satisfied by a first type of measurement result, a second type of measurement result is to be reported, and a control unit that determines, when it is specified or indicated that RRM measurement relaxing or adaptation is to be performed in a case in which a second condition including a threshold value is satisfied, that the threshold value corresponds to the second type of measurement result, and performs the RRM measurement relaxing or adaptation in a case in which the second condition including the threshold value is satisfied by the second type of measurement result is provided.

According to one aspect of the disclosed technology, a user equipment including a receiving unit that receives information indicating that, in a case in which a first condition is satisfied by a first type of measurement result, a second type of measurement result is to be reported, and a control unit that performs, when it is specified or indicated that RRM measurement relaxing or adaptation is to be performed in a case in which a second condition including a threshold value is satisfied by the first type of measurement result, the RRM measurement relaxing or adaptation in a case in which the second condition including the threshold value is satisfied by the first type of measurement result is provided.

### EFFECT OF THE INVENTION

According to the disclosed technology, it is possible to enable a user equipment to perform RRM measurement relaxing/adapting under appropriate conditions and reduce power consumption without lowering substantial performance in a wireless communication system.

### BRIEF DESCRIPTION OF DRAWINGS

Fig. 1 is a diagram for describing a wireless communication system in an embodiment of the present invention;
Fig. 2 is a diagram for describing discussions on NR standardization;
Fig. 3 is an example of a flowchart for describing an operation of a user equipment in a first embodiment;
Fig. 4 is an example of a flowchart for describing an operation of a user equipment in a second embodiment;
Fig. 5 is an example of a flowchart for describing an operation of a user equipment in a third embodiment;
Fig. 6 is a diagram illustrating an example of a functional configuration of a base station device 10 in an embodiment of the present invention;
Fig. 7 is a diagram illustrating an example of the functional configuration of a user equipment 20 in an embodiment of the present invention; and
Fig. 8 is a diagram illustrating an example of a hardware configuration of a base station device 10 or a user equipment 20 in an embodiment of the present invention.

### MODE(S) FOR CARRYING OUT THE INVENTION

Hereafter, exemplary embodiments of the present invention will be described with reference to the appended drawings. Further, embodiments to be described below are examples, and an embodiment to which the present invention is applied is not limited to the following embodiments.

The existing technology is used appropriately for an operation of a wireless communication system of an embodiment of the present invention. Here, the existing technology is, for example, the existing LTE but is not limited to the existing LTE. The term "LTE" used in this specification has a broad meaning including LTE-Advanced and schemes after LTE-Advanced (for example, NR) unless otherwise specified.

Also, in an embodiment of the present invention, a duplex scheme may be a Time Division Duplex (TDD) scheme, may be a Frequency Division Duplex (FDD) scheme, or may be other schemes (for example, Flexible Duplex or the like).

Further, in the following description, a method of transmitting a signal using transmission beams may be digital beam forming that transmits a signal multiplied by a precoding vector (precoded with a precoding vector) or analog beam forming that realizes beam forming using a variable phase shifter in a radio frequency (RF) circuit. Similarly, a method of receiving a signal using reception beams may be digital beam forming that multiplies a received signal by a predetermined weight vector or may be analog beam forming that realizes beam forming using a variable phase shifter in an RF circuit. Hybrid beam forming in which digital beam forming and analog beam forming are combined may be applied to transmission and/or reception. Further, transmitting a signal using transmission beams may be transmitting a signal through a specific antenna port. Similarly, receiving a signal using reception beams may be receiving a signal through a specific antenna port. An antenna port refers to a logical antenna port or a physical antenna port defined in the 3GPP standard. Further, the precoding or the beam forming described above may be referred to as a precoder or a spatial domain filter.

The method of forming transmission beams and reception beams is not limited to the above method. For example, in a base station device 10 or a user equipment 20 including a plurality of antennas, a method of changing an angle of each antenna may be used, a method in which a method of using a precoding vector and a method of changing angles of antennas are combined may be used, different antenna panels may be switched and used, a method of combining methods of using a plurality of antenna panels together may be used, or other methods may be used. Also, for example, a plurality of different transmission beams may be used in a high frequency band. The use of a plurality of transmission beams is called a multi-beam operation, and the use of one transmission beam is called a single-beam operation.

Further, in an embodiment of the present invention, when a radio parameter or the like is "configured", it may mean that a predetermined value is pre-configured or may mean that a radio parameter indicated by a base station device 10 or a user equipment 20 may be configured.

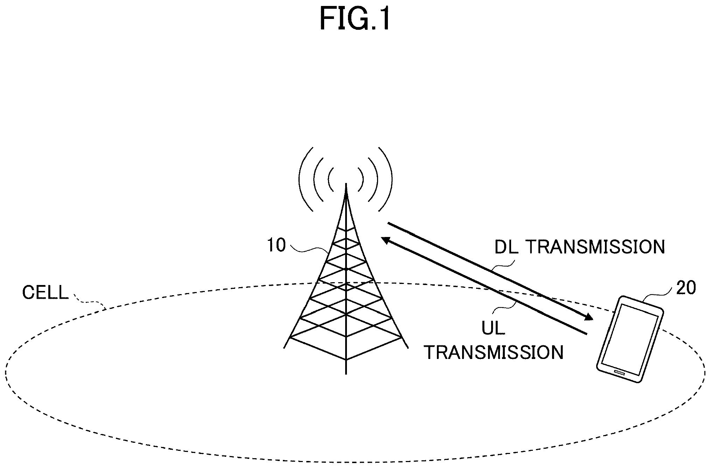

Fig. 1 is a diagram for describing a wireless communication system in an embodiment of the present invention. The wireless communication system in the embodiment of the present invention includes a base station device 10 and a user equipment 20 as illustrated in Fig. 1. Although one base station device 10 and one user equipment 20 are illustrated in Fig. 1, this is an example, and a plurality of base station devices 10 or a plurality of user equipments 20 may be arranged.

The base station device 10 is a communication device that provides one or more cells and performs wireless communication with the user equipment 20. Physical resources of wireless signals may be defined by a time domain and a frequency domain, the time domain may be defined by the number of OFDM symbols, and the frequency domain may be defined by the number of sub carriers or the number of resource blocks. As illustrated in Fig. 1, the base station device 10 transmits a control signal or data to the user equipment 20 by downlink (DL) and receives a control signal or data from the user equipment 20 by uplink (UL). Both the base station device 10 and the user equipment 20 can transmit and receive signals by performing beam forming.

The user equipment 20 is a communication device with a wireless communication function such as a smart phone, a mobile phone, a tablet, a wearable terminal, or a machine-to-machine (M2M) communication module. As illustrated in Fig. 1, the user equipment 20 uses various kinds of communication services provided by a wireless communication system by receiving a control signal or data from the base station device 10 by DL and transmitting a control signal or data to the base station device 10 by UL.

The user equipment 20 performs measurement for detecting a communication status. The user equipment 20 receives an event designated from the base station device 10 as a measurement configuration. The user equipment 20 transmits a measurement report to the base station device 10 when a condition related to a measurement result configured by an event is satisfied.

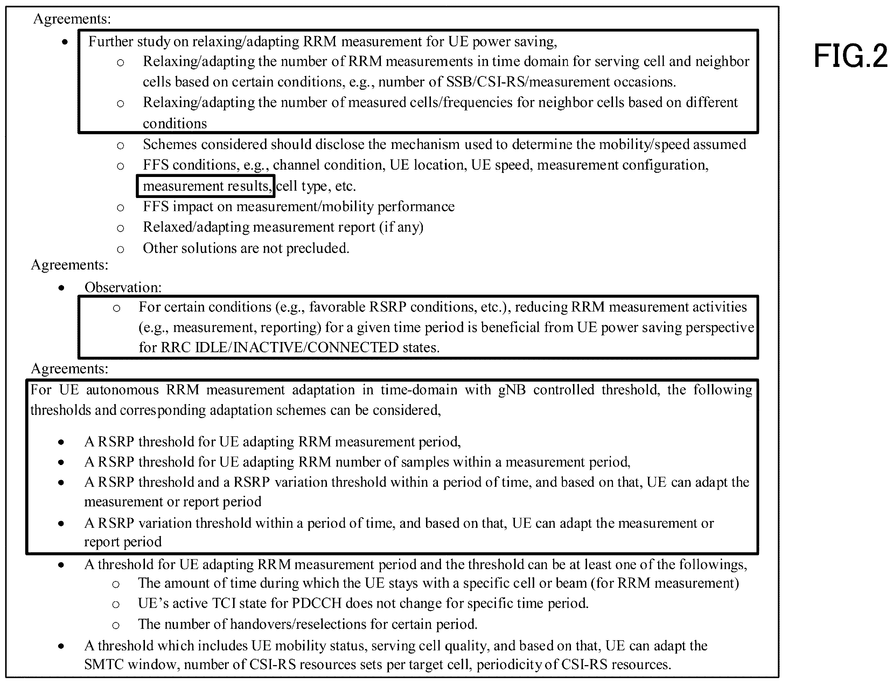

Fig. 2 is a diagram for describing discussions on NR standardization.

In the standardization of NR, performing RRM measurement relaxing or adapting when a predetermined condition is satisfied has been discussed.

The relaxing may be, for example, reducing a frequency at which the user equipment 20 performs measurement. Further, a frequency of reporting the measurement result may be reduced. Further, it may be relaxing relevant requirements (for example, a measurement period defined in Non-Patent Document 2) so that the frequency of measurements or reports is reduced.

The adapting may be, for example, an operation of restoring the RRM measurement when a predetermined condition is not satisfied after the user equipment 20 performs the RRM measurement relaxing. Further, the adapting is not limited to the operation of restoring the RRM measurement and may be an operation of adapting the RRM measurement for reducing power consumption.

For example, the predetermined condition for the RRM measurement relaxing or adapting may be a condition that a threshold value of the measurement result is specified from the base station device 10, and the RRM measurement relaxing or adapting is performed when a condition including the threshold value is satisfied.

Using the RSRP as the type of measurement result used as the predetermined condition for RRM measurement relaxing or adapting has been discussed. On the other hand, the type of measurement result used as a trigger (also referred to as an event trigger) for transmitting the measurement report is not limited to the RSRP, and the RSRQ, the SINR, or the like may be used. For example, there can be an event trigger for transmitting the measurement report when RSRQ exceeds X dB. The type of measurement result transmitted in the measurement report is not limited to the RSRP, but may be the RSRQ, the SINR, or the like.

As an operation at a time of RRM measurement relaxing or adapting, for example, there is consideration of an operation of performing relaxing when a condition, of assuming that a state in which a measurement report transmission is triggered will not soon occur, is satisfied. Further, as an operation when performing RRM measurement relaxing or adapting, an operation of performing relaxing according to a status of a value of the measurement result transmitted in the measurement report is also considered. In a case in which these operations are considered, if only the RSRP is used as the type of measurement result used as the condition for performing RRM measurement relaxing or adapting, these operations may not be performed properly.

### (First embodiment)

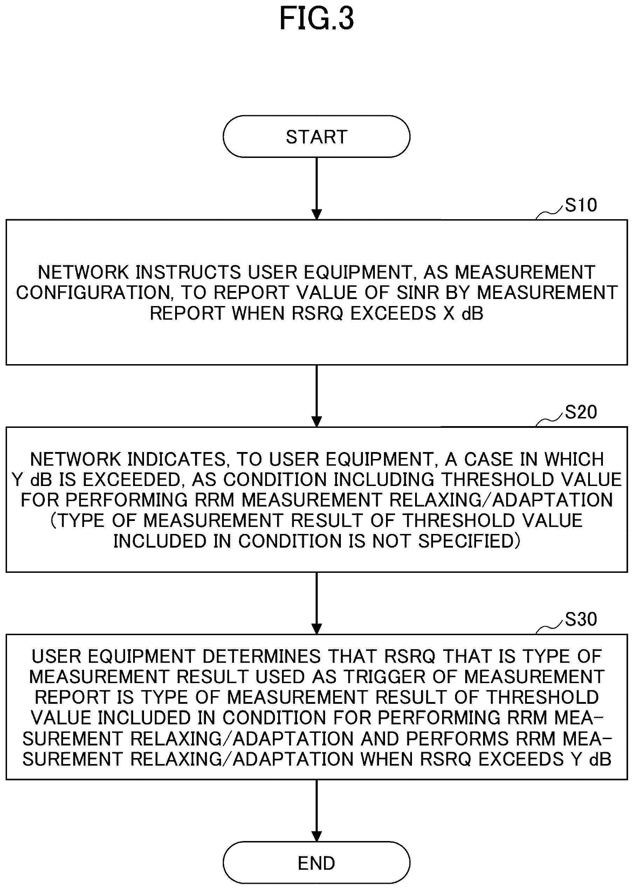

Fig. 3 is an example of a flowchart for describing an operation of a user equipment in the first embodiment. As illustrated in Fig. 3, in the designation of the condition for performing the RRM measurement relaxing or adapting, the type of measurement result used as the condition is not designated, and the user equipment 20 uses the same type of measurement result as a type of measurement type used as the transmission trigger of the measurement report as the condition for performing the RRM measurement relaxing or adapting.

In step S10, the network or the base station device 10 instructs the user equipment to report a value of the SINR by a measurement report when the RSRQ exceeds X dB as the measurement configuration. In step S20, the network or the base station device 10 instructs the user equipment to perform the RRM measurement relaxing or adapting when a threshold value Y dB is exceeded as a condition including a threshold value for performing the RRM measurement relaxing or adapting (alternatively, it may be specified in advance). In other words, in step S20, the type of the measurement result of the threshold value used as the condition is not specified. In step S30, the user equipment 20 determines that the RSRQ, which is the type of measurement result used as the trigger of the measurement report, is the type of measurement result of the threshold value of the condition for performing the RRM measurement relaxing or adapting, and performs the RRM measurement relaxing or adapting when the RSRQ exceeds YdB.

### (Second embodiment)

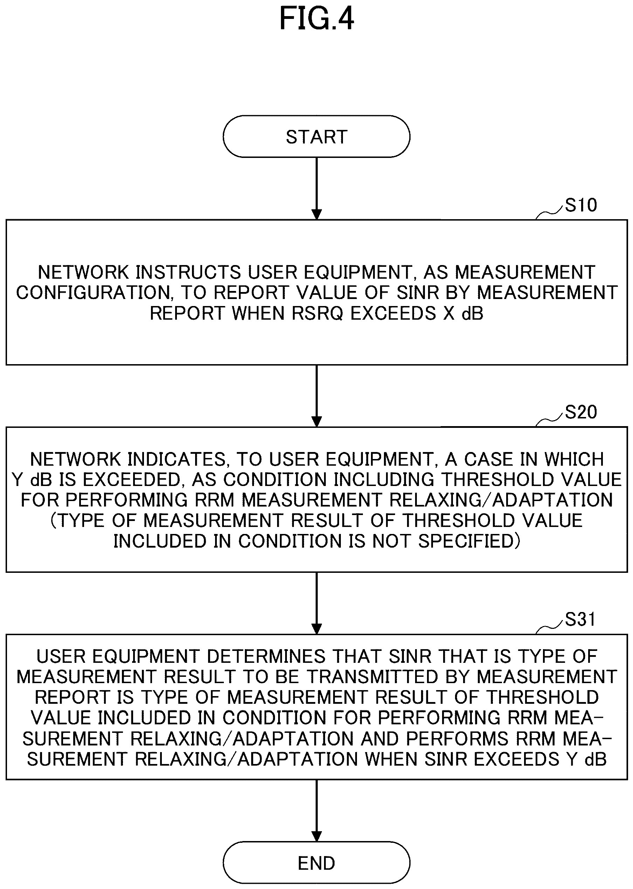

Fig. 4 is an example of a flowchart for describing an operation of a user equipment in the second embodiment. As illustrated in Fig. 4, in the designation of the condition for performing the RRM measurement relaxing or adapting, the type of measurement result used as the condition is not designated, and the user equipment 20 uses the same type of measurement result as a type of measurement type transmitted by the measurement report as the condition for performing the RRM measurement relaxing or adapting.

In step S10, the network or the base station device 10 instructs the user equipment to report a value of the SINR by a measurement report when the RSRQ exceeds XdB as the measurement configuration. In step S20, the network or the base station device 10 instructs the user equipment to perform the RRM measurement relaxing or adapting when a threshold value YdB is exceeded as a condition including a threshold value for performing the RRM measurement relaxing or adapting (alternatively, it may be specified in advance). In other words, in step S20, the type of the measurement result of the threshold value used as the condition is not specified. In step S31, the user equipment 20 determines that the SINR, which is the measurement result type transmitted by the measurement report, is the type of measurement result of the threshold value of the condition for performing the RRM measurement relaxing or adapting, and performs the RRM measurement relaxing or adapting when the SINR exceeds YdB.

### (Third embodiment)

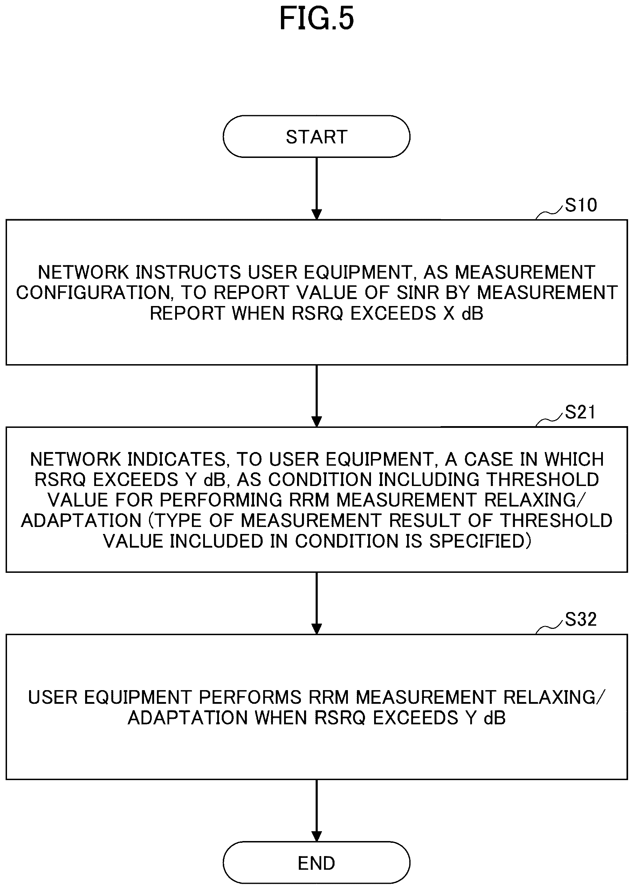

Fig. 5 is an example of a flowchart for describing an operation of a user equipment in the third embodiment. As illustrated in Fig. 5, in the designation of the condition for performing the RRM measurement relaxing or adapting, the type of measurement result used as the condition is designated.

In step S10, the network or the base station device 10 instructs the user equipment to report the SINR value by the measurement report when the RSRQ exceeds XdB as the measurement configuration. In step S21, the network or the base station device 10 instructs the user equipment to perform the RRM measurement relaxing or adapting when the RSRQ exceeds the threshold value YdB as the condition including the threshold value for performing the RRM measurement relaxing or adapting. In other words, in step S21, the type of the measurement result of the threshold value used as the condition is specified. In step S32, the user equipment 20 performs the RRM measurement relaxing or adapting when the RSRQ exceeds YdB.

### (Supplement)

The type of measurement result may be, for example, one of the RSRP, the RSRQ, and the SINR. Further, the types of measurement results (the RSRP, the RSRQ, and the SINR) may be further sub-divided, and a measurement result of each beam (for example, each SSB index or each CSI-RS) or a measurement in which a plurality of beams are combined (for example, a result obtained by filtering or averaging measurement results by different beams) may be used. Also, measurement results in different layers such as L1 and L3 may be distinguished and used as different types of measurement results.

In an embodiment of the present invention, an example such as "a case in which the measurement result exceeds YdB" is used as the condition using the threshold value for performing the RRM measurement relaxing or adapting. For the designation of the threshold value, the value of the measurement result itself may be designated, or a change amount in the measurement result from the previous measurement may be designated. Further, the change amount in the measurement result at a certain time (a designated time or a specified time) may be designated. Also, a relative value to other measurement result values may be designated. A combination of these values may also be designated. The threshold value is not limited to these designations.

According to the embodiments of the present invention, in the wireless communication system, the user equipment can perform the RRM measurement relaxing/adapting under appropriate conditions and reduce the power consumption without lowering substantial performance.

### (Device configuration)

Next, function configuration examples of a base station device 10 and a user equipment 20 that execute the processes and the operations described above will be described. The base station device 10 and the user equipment 20 have functions for implementing the embodiments described above. However, each of the base station device 10 and the user equipment 20 may have only some of the functions in the embodiment.

### <Base station device 10>

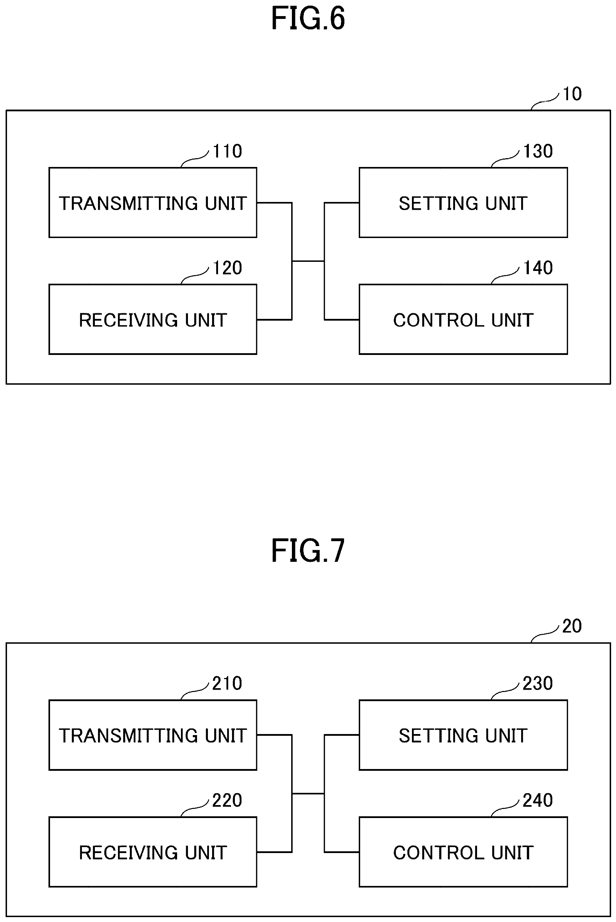

Fig. 6 illustrates an example of a functional configuration of the base station device 10. As illustrated in Fig. 6, the base station device 10 includes a transmitting unit 110, a receiving unit 120, a setting unit 130, and a control unit 140. The functional configuration illustrated in Fig. 6 is only an example. A functional classification and names of the functional unit may be any classification and any names as long as the operation according to an embodiment of the present invention can be executed.

The transmitting unit 110 includes a function of generating a signal to be transmitted to the user equipment 20 side and transmitting the signal wirelessly. The receiving unit 120 includes a function of receiving various kinds of signals transmitted from the user equipment 20 and acquiring, for example, higher layer information from the received signals.

The setting unit 130 stores configuration information configured in advance and various kinds of configuration information to be transmitted to the user equipment 20 in a storage device and reads out them from the storage device if necessary. For example, content of the configuration information is information related to the measurement of the user equipment 20.

The control unit 140 performs a process of generating the measurement configuration of the user equipment 20. The control unit 140 performs communication control on the basis of the measurement report obtained from the user equipment 20. The functional unit related to signal transmission in the control unit 140 may be included in the transmitting unit 110, and the functional unit related to signal reception in the control unit 140 may be included in the receiving unit 120.

### <User equipment 20>

Fig. 7 is a diagram illustrating an example of a functional configuration of the user equipment 20 in an embodiment of the present invention. As illustrated in Fig. 7, the user equipment 20 includes a transmitting unit 210, a receiving unit 220, a setting unit 230, and a control unit 240. The functional configuration illustrated in Fig. 7 is only an example. A functional classification and names of the functional unit may be any classification and any names as long as the operation according to an embodiment of the present invention can be executed.

The transmitting unit 210 generates a transmission signal from transmission data and transmits the transmission signal wirelessly. The receiving unit 220 wirelessly receives various kinds of signals and acquires higher layer signals from received physical layer signals. Further, the receiving unit 220 has a function of receiving DL/UL control signals transmitted from the base station device 10.

The setting unit 230 stores various kinds of configuration information received from the base station device 10 by the receiving unit 220 in the storage device, and reads out them from the storage device if necessary. The setting unit 230 also stores configuration information configured in advance. For example, content of the configuration information is information related to the measurement of the user equipment 20.

The control unit 240 executes the measurement on the basis of the measurement configuration acquired from the base station device 10 as described in the embodiments. Further, the control unit 240 reports the measurement result to the base station device 10. The functional unit related to signal transmission in the control unit 240 may be included in the transmitting unit 210, and the functional unit related to signal reception in the control unit 240 may be included in the receiving unit 220.

### (Hardware configuration)

In the block diagrams (Figs. 6 and 7) used for the description of the embodiment, the blocks of the functional units are illustrated. The functional blocks (configuring units) are implemented by an arbitrary combination of hardware and/or software. A device of implementing each functional block is not particularly limited. In other words, each functional block may be implemented by one device which is physically or logically combined or may be implemented by a plurality of devices, that is, two or more devices which are physically and/or logically separated and are directly or indirectly connected (for example, a wired and/or wireless manner). The function block may be implemented by combining software with the one device or the plurality of devices.

The functions include determining, deciding, judging, computing, calculating, processing, deriving, investigating, searching, confirming, receiving, transmitting, outputting, accessing, resolving, selecting, choosing, establishing, comparing, assuming, expectation, regarding, broadcasting, notifying, communicating, forwarding, configuring, reconfiguring, allocating, mapping, assigning, and the like but are not limited thereto. For example, a functional block (configuring unit) that causes transmission to function is referred to as a transmitting unit or a transmitter. In any case, as described above, an implementation method is not particularly limited.

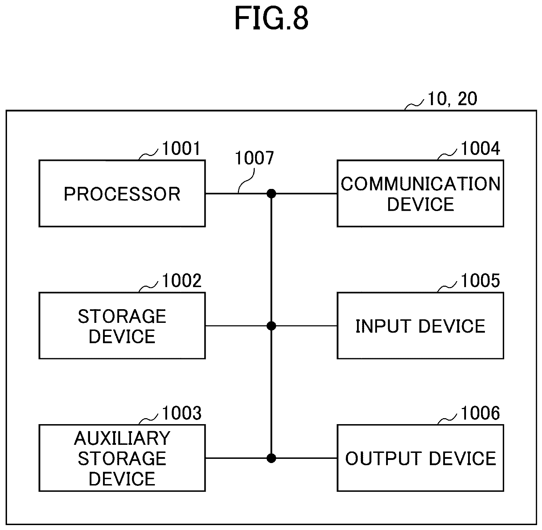

For example, the base station device 10, the user equipment 20, or the like in one embodiment of the present disclosure may function as a computer for processing the present disclosure's wireless communication method. Fig. 8 is a diagram illustrating an example of a hardware configuration of the base station device 10 and the user equipment 20 according to an embodiment of the present disclosure. Each of the base station device 10 and the user equipment 20 may be physically configured as a computer device including a processor 1001, a storage device 1002, an auxiliary storage device 1003, a communication device 1004, an input device 1005, an output device 1006, a bus 1007, and the like.

In the following description, the term "device" can be read as a circuit, device, unit, or the like. The hardware configuration of each of the base station device 10 and the user equipment 20 may be configured to include one or more devices illustrated in the drawing or may be configured without including some devices.

Each function in each of the base station device 10 and the user equipment 20 is implemented such that predetermined software (program) is read on hardware such as the processor 1001 and the storage device 1002, and the processor 1001 performs an operation and controls communication by the communication device 1004 and reading and/or writing of data in the storage device 1002 and the auxiliary storage device 1003.

For example, the processor 1001 operates an operating system and controls the entire computer. The processor 1001 may be configured with a central processing unit (CPU) including an interface with a peripheral device, a control device, an operation device, a register, and the like. For example, the control unit 140, the control unit 240, and the like described above may be implemented by the processor 1001.

Further, the processor 1001 reads a program (program code), a software module, or data from at least one of the auxiliary storage device 1003 and/or the communication device 1004 out to the storage device 1002, and executes various types of processes according to them. A program causing a computer to execute at least some of the operations described in the above embodiment is used as the program. For example, the control unit 140 of the base station device 10 illustrated in Fig. 6 may be implemented by a control program which is stored in the storage device 1002 and operates on the processor 1001. Further, for example, the control unit 240 of the user equipment 20 illustrated in Fig. 7 may be implemented by a control program which is stored in the storage device 1002 and operates on the processor 1001. Various types of processes have been described as being performed by one processor 1001 but may be performed simultaneously or sequentially by two or more processors 1001. The processor 1001 may be implemented by one or more chips. The program may be transmitted from a network via an electric communication line.

The storage device 1002 is a computer readable recording medium and configured with at least one of a read only memory (ROM), an erasable programmable ROM (EPROM), an electrically erasable programmable ROM (EEPROM), a random access memory (RAM), and the like. The storage device 1002 is also referred to as a "register," a "cache," a "main memory," or the like. The storage device 1002 can store programs (program codes), software modules, or the like which are executable for carrying out the communication method according to an embodiment of the present disclosure.

The auxiliary storage device 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The auxiliary storage device 1003 may be referred to as an auxiliary storage device. The storage medium may be, for example, a database, a server, or any other appropriate medium including at least one of the storage device 1002 and the auxiliary storage device 1003.

The communication device 1004 is hardware (a transceiving device) for performing communication between computers via at least one of a wired network and a wireless network and is also referred to as a "network device," a "network controller," a "network card," a "communication module," or the like. The communication device 1004 may include a high-frequency switch, a duplexer, a filter, a frequency synthesizer, or the like in order to implement at least one of frequency division duplex (FDD) and time division duplex (TDD). For example, a transceiving antenna, an amplifying unit, a transmitting/receiving unit, a transmission line interface, or the like may be implemented by the communication device 1004. The transmitting/receiving unit may be implemented by to be physically or logically separated by a transmitting unit and a receiving unit.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs output to the outside. The input device 1005 and the output device 1006 may be integrated (for example, a touch panel).

The respective devices such as the processor 1001 and the storage device 1002 are connected via the bus 1007 to communicate information with each other. The bus 1007 may be configured with a single bus or may be configured with different buses between the devices.

Further, each of the base station device 10 and the user equipment 20 may be configured to include hardware such as a microprocessor, a digital signal processor (DSP), an application specific integrated circuit (ASIC), a programmable logic device (PLD), or a field programmable gate array (FPGA) or all or some of the functional blocks may be implemented by hardware. For example, the processor 1001 may be implemented using at least one of these pieces of hardware.

### (Conclusion of embodiment)

As described above, according to an embodiment of the present invention, a user equipment including a receiving unit that receives information indicating that, in a case in which a first condition is satisfied by a first type of measurement result, a second type of measurement result is to be reported, and a control unit that determines, when it is specified or indicated that RRM measurement relaxing or adaptation is to be performed in a case in which a second condition including a threshold value is satisfied, that the threshold value corresponds to the first type of measurement result, and performs the RRM measurement relaxing or adaptation in a case in which the second condition including the threshold value is satisfied by the first type of measurement result is provided.

Further, according to an embodiment of the present invention, a user equipment including a receiving unit that receives information indicating that, in a case in which a first condition is satisfied by a first type of measurement result, a second type of measurement result is to be reported, and a control unit that determines, when it is specified or indicated that RRM measurement relaxing or adaptation is to be performed in a case in which a second condition including a threshold value is satisfied, that the threshold value corresponds to the second type of measurement result, and performs the RRM measurement relaxing or adaptation in a case in which the second condition including the threshold value is satisfied by the second type of measurement result is provided.

Further, according to an embodiment of the present invention, a user equipment including a receiving unit that receives information indicating that, in a case in which a first condition is satisfied by a first type of measurement result, a second type of measurement result is to be reported, and a control unit that performs, when it is specified or indicated that RRM measurement relaxing or adaptation is to be performed in a case in which a second condition including a threshold value is satisfied by the first type of measurement result, the RRM measurement relaxing or adaptation in a case in which the second condition including the threshold value is satisfied by the first type of measurement result is provided.

With the above configuration, the user equipment 20 can perform the RRM measurement relaxing/adapting under appropriate conditions and can reduce the power consumption without lowering substantial performance.

### (Supplement of embodiment)

The exemplary embodiment of the present invention has been described above, but the disclosed invention is not limited to the above embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention, matters described in two or more items may be combined and used if necessary, and a matter described in one item may be applied to a matter described in another item (unless inconsistent). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no inconsistency. For the sake of convenience of processing description, the base station device 10 and the user equipment 20 have been described using the functional block diagrams, but such devices may be implemented by hardware, software, or a combination thereof. Software executed by the processor included in the base station device 10 according to the embodiment of the present invention and software executed by the processor included in the user equipment 20 according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Further, an indication of information is not limited to the aspect or embodiment described in the present disclosure and may be given by any other method. For example, the indication of information may be given by physical layer signaling (for example, downlink control information (DCI) or uplink control information (UCI)), upper layer signaling (for example, radio resource control (RRC) signaling, medium access control (MAC) signaling, broadcast information (master information block (MIB), system information block (SIB))), other signals, or a combination thereof. Further, the RRC signaling may be referred to as an RRC message and may be, for example, an RRC connection setup message, an RRC connection reconfiguration message, or the like.

Each aspect and embodiment of the present invention may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system using any other appropriate system, and next generation systems extended on the basis of these standards. Further, a plurality of systems may be combined and applied (for example, a combination of at least one of LTE and LTE-A and 5G or the like).

The processing procedures, the sequences, the flowcharts, and the like of the respective aspects/embodiments described in this specification may be reversed in order unless there is a contradiction. For example, the method described in the present disclosure presents elements of various steps using an exemplary order and is not limited to a presented specific order.

In this specification, a specific action that is supposed to be performed by the base station device 10 may be performed by an upper node in some cases. In the network including one or more network nodes including the base station device 10, various operations performed for communication with the user equipment 20 can be obviously performed by at least one of the base station and any network node (for example, an MME, an S-GW, or the like is considered, but it is not limited thereto) other than the base station device 10 and/or the base station device 10. The example in which the number of network nodes excluding the base station device 10 is one has been described above, but other network nodes in which a plurality of other network nodes (for example, an MME and an S-GW) are combined may be provided.

Information, a signal, or the like described in the present disclosure may be output from an upper layer (or a lower layer) to a lower layer (or an upper layer). Information, a signal, or the like described in the present disclosure may be input and output via a plurality of network nodes.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

The determination the present disclosure may be performed in accordance with a value (0 or 1) indicated by one bit, may be performed in accordance with a Boolean value (true or false), or may be performed by a comparison of numerical values (for example, a comparison with a predetermined value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Further, software, commands, information, and the like may be transmitted and received via a transmission medium. For example, when software is transmitted from a web site, a server, or any other remote source using at least one of a wired technology (such as a coaxial cable, a fiber optic cable, a twisted pair, or a digital subscriber line (DSL)) and a radio technology (such as infrared rays or a microwave), at least one of the wired technology and the radio technology are included in a definition of a transmission medium.

Information, signals, and the like described in this specification may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or an arbitrary combination thereof.

The terms described in the present disclosure and terms necessary for understanding the present disclosure may be replaced with terms having the same or similar meanings. For example, at least one of a channel and a symbol may be a signal. Further, a signal may be a message. Further, a component carrier (CC) may be referred to as a "carrier frequency," a "cell," or the like.

The terms "system" and "network" used in the present disclosure are used interchangeably.

Further, information, parameters, and the like described in the present disclosure may be indicated by absolute values, may be indicated by relative values from predetermined values, or may be indicated by corresponding other information. For example, radio resources may be those indicated by an index.

The names used for the above-described parameters are not limited in any respect. Further, mathematical formulas or the like using the parameters may be different from those explicitly disclosed in the present disclosure. Since various channels (for example, a PUCCH, a PDCCH, and the like) and information elements can be identified by suitable names, various names allocated to the various channels and the information elements are not limited in any respect.

In the present disclosure, the terms "base station (BS)," "radio base station," "base station device," "fixed station," "Node B," "eNode B (eNB) gNodeB (gNB)," "access point," "transmission point," "reception point," "transmission/reception point," "cell," "sector," "cell group," "carrier," "component carrier," and the like can be used interchangeably. The base stations may also be indicated by terms such as a macro cell, a small cell, a femtocell, and a picocell.

The base station eNB can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (a remote radio head (RRH)). The term "cell" or "sector" refers to the whole or a part of the coverage area of at least one of the base station and the base station subsystem that performs a communication service in the coverage.

In the present disclosure, the terms "mobile station (MS)," "user terminal," "user equipment (UE)," "terminal," and the like can be used interchangeably.

The mobile station may be a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, It may also be referred to as a remote terminal, handset, user agent, mobile client, client, or some other suitable term.

At least one of the base station and the mobile station may be also referred to as a transmitting device, a receiving device, a communication device, or the like. At least one of the base station and the mobile station may be a device installed in a mobile body, a mobile body itself, or the like. The moving body may be a vehicle (for example, a car, an airplane, or the like), a moving body that moves unmanned (for example, a drone, an autonomous car or the like), or a robot (manned type or unmanned type). At least one of the base station and the mobile station includes a device which need not necessarily move during a communication operation. For example, at least one of the base station and the mobile station may be an Internet of things (IoT) device such as a sensor.

The terms "determining" and "deciding" used in this specification may include a wide variety of actions. For example, "determining" and "deciding" may include, for example, events in which events such as judging, calculating, computing, processing, deriving, investigating, looking up, search, and inquiry (for example, looking up in a table, a database, or another data structure), or ascertaining are regarded as "determining" or "deciding." Further, "determining" and "deciding" may include, for example, events in which events such as receiving (for example, receiving information), transmitting (for example, transmitting information), input, output, or accessing (for example, accessing data in a memory) are regarded as "determining" or "deciding." Further, "determining" and "deciding" may include, for example, events in which events such as resolving, selecting, choosing, establishing, or comparing are regarded as "determining" or "deciding." In other words, "determining" and "deciding" may include events in which a certain operation is regarded as "determining" or "deciding." Further, "determining (deciding)" may be replaced with "assuming," "expecting," "considering," or the like.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case in which used in the present disclosure, two elements may be considered to be "connected" or "coupled" with each other using at least one of one or more electric wires, cables and/or a printed electrical connection or using electromagnetic energy having a wavelength in a radio frequency domain, a microwave region, or an light (both visible and invisible) region as non-limiting and non-exhaustive examples.

A reference signal may be abbreviated as RS and may be referred to as a pilot, depending on a standard to be applied.

A phrase "on the basis of" used in the present disclosure is not limited to "on the basis of only" unless otherwise stated. In other words, a phrase "on the basis of" means both "on the basis of only" and "on the basis of at least."

Any reference to an element using a designation such as "first," "second," or the like used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Further, "means" in the configuration of each of the above devices may be replaced with "unit," "circuit," "device," or the like.

In a case in which "include," "including," and variations thereof are used in the present disclosure, these terms are intended to be comprehensive, similarly to a term "comprising." Further, the term "or" used in the present disclosure is intended not to be an exclusive disjunction.

In the entire present disclosure, for example, when an article such as "a," "an," or "the" in English is added by a translation, the present disclosure may include a case in which a noun following the article is the plural.

In the present disclosure, a term "A and B are different" may mean "A and B are different from each other." Further, the term may mean "each of A and B is different from C." Terms such as "separated," "coupled," or the like may also be interpreted in similarly to "different."

Each aspect/embodiment described in this specification may be used alone, in combination, or may be switched in accordance with the execution. Further, indication of predetermined information (for example, indication of "being X") is not limited to being performed explicitly, but is performed by implicit (for example, not indicating the predetermined information) It is also good.

Although the present disclosure has been described above in detail, it is obvious to those skilled in the art that the present disclosure is not limited to the embodiments described in the present disclosure. The present disclosure may be implemented as revised and modified forms without departing from the gist and scope of the present disclosure as configured forth in claims. Therefore, the description of the present disclosure is for the purpose of illustration and does not have any restrictive meaning to the present disclosure.

### EXPLANATIONS OF LETTERS OR NUMERALS

- 10: BASE STATION DEVICE
- 110: TRANSMITTING UNIT
- 120: RECEIVING UNIT
- 130: SETTING UNIT
- 140: CONTROL UNIT
- 20: USER EQUIPMENT
- 210: TRANSMITTING UNIT
- 220: RECEIVING UNIT
- 230: SETTING UNIT
- 240: CONTROL UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A user equipment, comprising:
a receiving unit that receives information indicating that, in a case in which a first condition is satisfied by a first type of measurement result, a second type of measurement result is to be reported; and
a control unit that determines, when it is specified or indicated that radio resource management (RRM) measurement relaxing or adaptation is to be performed in a case in which a second condition including a threshold value is satisfied, that the threshold value corresponds to the first type of measurement result, and performs the RRM measurement relaxing or adaptation in a case in which the second condition including the threshold value is satisfied by the first type of measurement result.

2. A user equipment, comprising:
a receiving unit that receives information indicating that, in a case in which a first condition is satisfied by a first type of measurement result, a second type of measurement result is to be reported; and
a control unit that determines, when it is specified or indicated that RRM measurement relaxing or adaptation is to be performed in a case in which a second condition including a threshold value is satisfied, that the threshold value corresponds to the second type of measurement result, and performs the RRM measurement relaxing or adaptation in a case in which the second condition including the threshold value is satisfied by the second type of measurement result.

3. A user equipment, comprising:
a receiving unit that receives information indicating that, in a case in which a first condition is satisfied by a first type of measurement result, a second type of measurement result is to be reported; and
a control unit that performs, when it is specified or indicated that RRM measurement relaxing or adaptation is to be performed in a case in which a second condition including a threshold value is satisfied by the first type of measurement result, the RRM measurement relaxing or adaptation in a case in which the second condition including the threshold value is satisfied by the first type of measurement result.

4. A measurement method of a user equipment, comprising:
a step of receiving information indicating that, in a case in which a first condition is satisfied by a first type of measurement result, a second type of measurement result is to be reported; and
a step of determining, when it is specified or indicated that RRM measurement relaxing or adaptation is to be performed in a case in which a second condition including a threshold value is satisfied, that the threshold value corresponds to the first type of measurement result, and performing the RRM measurement relaxing or adaptation in a case in which the second condition including the threshold value is satisfied by the first type of measurement result.

5. A measurement method of a user equipment, comprising:
a step of receiving information indicating that, in a case in which a first condition is satisfied by a first type of measurement result, a second type of measurement result is to be reported; and
a step of determining, when it is specified or indicated that RRM measurement relaxing or adaptation is to be performed in a case in which a second condition including a threshold value is satisfied, that the threshold value corresponds to the second type of measurement result, and performing the RRM measurement relaxing or adaptation in a case in which the second condition including the threshold value is satisfied by the second type of measurement result.

6. A measurement method of a user equipment, comprising:
a step of receiving information indicating that, in a case in which a first condition is satisfied by a first type of measurement result, a second type of measurement result is to be reported; and
a step of performing, when it is specified or indicated that RRM measurement relaxing or adaptation is to be performed in a case in which a second condition including a threshold value is satisfied by the first type of measurement result, the RRM measurement relaxing or adaptation in a case in which the second condition including the threshold value is satisfied by the first type of measurement result.
